# EUROPÄISCHE PATENTSCHRIFT

(11) **EP 3 365 476 B1**
(45) Veröffentlichungstag und Bekanntmachung des Hinweises auf die Patenterteilung: **31.07.2019**
(21) Anmeldenummer: 16785094.0
(22) Anmeldetag: 21.10.2016
(51) Int. Cl.: C25D 11/16, C25D 11/08, C25D 11/24, C23C 18/12, B05D 7/14, B05D 1/02, B05D 3/02, C09D 4/06, C09D 5/08, C09D 175/06, C09D 5/02

(54) **ALKALIRESISTENTE BESCHICHTUNG FÜR LEICHTMETALLE, INSBESONDERE ALUMINIUM**
ALKALI-RESISTANT COATING FOR LIGHT METALS, IN PARTICULAR ALUMINIUM
REVÊTEMENT RÉSISTANT AUX ALCALINS POUR MÉTAUX LÉGERS, EN PARTICULIER POUR L'ALUMINIUM

(30) Priorität: 22.10.2015 EP 15191132
(43) Veröffentlichungstag der Anmeldung: 29.08.2018
(73) Patentinhaber: EPG (Engineered nanoProducts Germany) AG, 64347 Griesheim (DE)
(72) Erfinder: ARPAC, Etrugrul, 07058 Antalya (TR); SCHNEIDER, Heike, 66399 Mandelbachtal (DE); HOYER, Günter, 50676 Köln (DE); KOCKLER, Ralf, 66780 Rehlingen/Siersburg (DE); AREND, Sandra, 66916 Breitenbach (DE)
(74) Vertreter: Rippel, Hans Christoph
(86) Internationale Anmeldenummer: PCT/EP2016/001745
(87) Internationale Veröffentlichungsnummer: WO 2017/067666

(56) Entgegenhaltungen:
- DE-A1- 4 338 361
- DE-A1-102007 003 761
- DE-A1-102008 063 160
- DE-A1-102012 022 731
- DE-A1-102013 017 217

## Beschreibung

Die Erfindung betrifft ein mit einem Sol-Gel-Hybridmaterial beschichtetes Leichtmetallsubstrat, insbesondere aus blankem oder anodisiertem (eloxiertem) Aluminium, ein Verfahren zu dessen Herstellung sowie Beschichtungszusammensetzung, die in dem Verfahren eingesetzt werden.

Bauteile aus Leichtmetallen wie Aluminium kommen im Außen- und Innenbereich von Kraftfahrzeugen immer häufiger zum Einsatz. Vor allem die im äußeren Bereich liegenden Bauteile, wie Zierleisten und Trittbretter, benötigen eine Beschichtung, welche die Bauteile vor Korrosion und dem Angriff vor aggressiven Medien wie Reinigungsmitteln schützt. Unbehandelte Aluminiumoberflächen sind empfindlich gegenüber der Anwendung von Reinigungslösungen mit pH-Werten von 1 bis zu 13,5, wie sie in berührungsfreien Waschstraßen immer mehr zum Einsatz kommen. Die Bauteile werden dadurch auch optisch entwertet und können zu Kundenbeschwerden und Regress führen.

Um Aluminiumoberflächen zu schützen und mechanisch zu stabilisieren, werden diese durch das elektrochemische Verfahren der anodischen Oxidation behandelt, wobei die auf dem Aluminiummetall natürlich entstehende Oxidschicht künstlich verstärkt wird (Eloxierung). Je nach Herstellungsbedingungen und Aluminiumlegierungen sind verschiedene Arten von Eloxalschichten bekannt. Technische Eloxalschichten werden bei Raumtemperatur und Stromdichten von 1,5 A/dm² in einem Schwefelsäureelektrolyten hergestellt. Eloxierte Oberflächen sind transparent und schützen gegenüber nicht behandelten Oberflächen das Aluminium in gewissem Maße gegen Korrosion und Verkratzen. Harteloxalschichten werden bei Temperaturen um 0°C mit höheren Stromdichten von 2-5 A/dm² in gemischten Schwefelsäureelektrolyten erzeugt. Sie zeichnen sich gegenüber dem technischen Eloxal durch eine besonders erhöhte Abrieb- und Kratzfestigkeit aus. Ein drittes Verfahren ist das Glanzeloxalverfahren. Bei diesem Verfahren wird das Metall vor dem technischen Eloxieren durch Elektropolieren geglänzt und anschließend in einem Schwefelsäureelektrolyten eloxiert. Eloxalschichten besitzen eine porige Struktur, in diese Poren können optional Farbstoffe oder andere Stoffe eingelagert werden. Die Öffnungen der Poren können durch Verdichten in heißem Wasser verschlossen werden. Hierbei bildet sich Aluminiumoxidhydrat (Boehmit) in der Pore, welches zu einer Verbesserung der Korrosionsbeständigkeit führt. Die Alkalibeständigkeit kann dadurch allerdings nicht verbessert werden.

Durch das Eloxieren wird die Korrosionsbeständigkeit gegenüber dem blanken Aluminium zwar verbessert, nachteilig an den Eloxalschichten ist aber die mangelnde pH-Stabilität. Diese liegt nur zwischen pH 4 bis 9. Für pH-Werte, die außerhalb dieses Bereiches liegen, muss offenkundig also entweder das blanke Aluminium oder die Eloxalschicht durch eine darüber liegende Schicht geschützt werden. Dies ist insbesondere der Fall bei allen Anwendungen, bei denen die Al-Bauteile mit aggressiven sauren oder basischen Medien in Kontakt kommen, wie es z.B. bei sichtbaren Außenteilen am Automobil wie Zierleisten und Trittbrettern, die durch alkalische Waschstraßen gereinigt werden.

Aus wirtschaftlichen Gründen ist es ein Anliegen, möglichst wenige Prozessschritte zu verwenden, um die geforderte Beständigkeit zu erreichen. Deswegen besteht ein hoher Bedarf an einem nasschemischen Verfahren, welches den energieintensiven Eloxalprozeß umgeht und dabei die Eigenschaften der Alkalibeständigkeit, Korrosionsbeständigkeit und Abriebbeständigkeit liefert.

Aus dem Stand der Technik sind verschiedene Lösungen bekannt, die Korrosionsbeständigkeit, hier insbesondere die Säure- und Alkalibeständigkeit von Zier -und Funktionsteilen, an Automobilen zu optimieren. Dabei haben sich zwei Ansätze herauskristallisiert. Dem ersten Ansatz liegt eine Überbeschichtung mit einem transparenten Lack auf der anodischen Beschichtung zugrunde, um die Optik zu erhalten. Bei dem zweiten Ansatz versucht man durch Variation des Sealingprozesses die poröse Eloxalschicht zu verstärken.

EP 1 407 935 A1 beschreibt ein Verfahren, bei dem teilverdichtete Glanzeloxaloberflächen mit einer dünnkeramischen transparenten Beschichtung (Cerapaint, Aluceram) überzogen werden. Die Beschichtung wird elektrostatisch aufgebracht, wobei die Schichtdicke zwischen 5 und 7 µm liegt. Die mit der dünnkeramischen Beschichtung versehenen Oberflächen weisen gute Korrosionseigenschaften auf, wobei diese aber nur im pH-Bereich von 1 bis 13,5 stabil sind.

Aus der Offenlegungsschrift DE 10 2012 019 969 A1 ist ein Verfahren bekannt, bei dem die Eloxalschicht durch einen Eloxierprozess derart erzeugt wird, dass eine kontinuierlich erhöhte Spannung von 0 V bis zu einer Haltespannung angelegt wird und ein konstanter Spannungsgradient verwendet wird. Die dabei entstehende Porenstruktur weist eine hohe Porendichte aus, welche hervorragend dazu geeignet ist, eine Anbindung für eine anschließend aufgebrachte Sol-Gel-Lösung zu bewirken.

DE 10 2006 011 769 B4 schildert ein Verfahren, wobei teil- oder vollverdichtete glanzeloxierte Zier- oder Funktionsteile mittels eines nasschemischen Verfahrens so behandelt werden, dass diese mit einer Schicht aus ambivalenten Molekülen so verbunden werden, dass das funktionelle Ende mit der anodisierten Schicht verbunden ist und das weitere funktionelle Ende hydrophob aus der Schicht herausragt.

WO2009/068168A1 beschreibt einen Prozess, der ausgehend von einer anodisierten Schicht auf Aluminium, diese durch eine gleichmäßige Deckschicht abdeckt. Die Deckschicht wird dabei dadurch erzeugt, dass die Poren durch eine Aluminiumoxidhydrat-Schicht verschlossen werden und zusätzlich Aluminiumsilikate eingebaut oder darauf aufgebaut werden.

Ein Verfahren zur Beschichtung von optischen Formkörpern ist in der DE 102013017217 beschrieben.

Obwohl mit den bekannten Systemen bereits gute Ergebnisse erzielt werden, bleibt doch ein breiter Raum für Verbesserungen, beispielsweise was die Alkalibeständigkeit oder den Schutz von nicht eloxierten Substraten mit transparenten Beschichtungen angeht.

Eine Aufgabe der Erfindung bestand deshalb darin, ein Verfahren zur Beschichtung von eloxiertem Aluminium, insbesondere glanzeloxiertem Aluminium, auf Aluminiumsubstraten zu finden, das eine besonders hohe Alkalistabilität von pH 1 bis 14 zeigt.

Eine weitere Aufgabe der Erfindung war es, ein Verfahren zum einfachen Ersatz einer anodisch oxidierten Oberfläche aus Aluminium oder einer Aluminiumlegierung zu finden, d.h. ein Verfahren, welches ohne das kostenintensive Eloxalverfahren auskommt.

Die Aufgabe konnte überraschenderweise dadurch gelöst werden, dass Leichtmetallsubstrate, insbesondere eloxierte oder nicht eloxierte Aluminiumoberflächen, mit einer Beschichtungszusammensetzung beschichtet werden, die aus einer Sol-Gel-Hybrid-Struktur, ausgehend von bestimmten Komponenten, besteht.

Gegenstand der Erfindung ist daher ein Verfahren zur Herstellung eines beschichteten Leichtmetall-, insbesondere Aluminiumsubstrats, enthaltend die Schritte
a) nasschemisches Aufbringen einer Beschichtungszusammensetzung auf das Leichtmetallsubstrat und
b) thermisches Aushärten der Beschichtungszusammensetzung,
wobei die Beschichtungszusammensetzung ein Sol-Gel-Material enthält, erhalten aus
A. einem oder mehreren teilhydrolysierten Alkoxysilanen der Formel (I)

   (R¹O)ₙSiR²₃₋ₙR³ (I),

   wobei die Symbole und Indizes folgende Bedeutungen haben:
   - R¹: ist C₁-C₆-Alkyl oder C₁-C₁₀-Aryl;
   - R²: ist C₁-C₄-Alkyl, C₂-C₄-Alkenyl oder C₂-C₄-Alkinyl, C₆-C₁₀-Aryl, C₆-C₁₀-Aralkyl oder C₆-C₁₀-Alkaryl,
   - R³: ist eine epoxyfunktionelle Gruppe und
   - n: ist 1, 2 oder 3;
B. einem oder mehreren Metallalkoxiden der Formel (II)

   M^{+(4-m)}(X)₄₋ₘ (II),

   wobei die Symbole und Indizes folgende Bedeutungen haben:
   - M: ist ein Metall der 3. oder 4. Haupt- oder Nebengruppe mit EN < 1,5, bevorzugt Al, Zr, Ti oder B, besonders bevorzugt Al;
   - X: ist (OR⁴), Halogen, NH₃ oder ein primäres, sekundäres oder tertiäres (C₁-C₄)-Alkylamin,
   - R⁴: ist C₁-C₆-Alkyl oder C₆-C₁₀-Aryl und
   - m: ist 0 oder 1, bevorzugt 1,
   in Kombination mit einem oder mehreren Komplexbildnern aus der Gruppe der 1,3-Dicarbonylverbindungen;
C. einem oligomeren oder polymeren Polyol und
D. gegebenenfalls einem oder mehreren geblockten Polyisocyanaten.

Weiterhin Gegenstand der Erfindung ist ein Leichtmetallsubstrat, insbesondere Aluminiumsubstrat, beschichtet mit dem erfindungsgemäßen Verfahren.

Weiterhin Gegenstand der Erfindung ist ein Leichtmetallsubstrat, insbesondere Aluminiumsubstrat beschichtet mit der erfindungsgemäßen Beschichtungszusammensetzung.

Ebenso Gegenstand der Erfindung ist die Verwendung einer erfindungsgemäßen Beschichtungszusammensetzung zur Beschichtung von Leichtmetallsubstraten, insbesondere Aluminiumsubstraten.

Weiterhin Gegenstand der Erfindung ist eine Beschichtungszusammensetzung, enthaltend ein Sol-Gel-Material erhalten aus
A. teilhydrolysiertem 3-Glycidyloxypropyltrimethoxysilan,
B. Aluminium-sec.-butylat, komplexiert mit Ethylacetoacetat,
C. einem verzweigten, hydroxylgruppenhaltigen Polyester und
D. gegebenenfalls einem oder mehreren, vorzugsweise aliphatischen, geblockten Polyisocyanaten.

Die erfindungsgemäß hergestellte Beschichtung zeichnet sich durch eine vorteilhafte Kombination von Alkalibeständigkeit, Korrosionsbeständigkeit und Abriebbeständigkeit aus.

Überraschenderweise wurde nun gefunden, dass das System eine Alkalistabilität bis pH 14 (nach SWA-Wechseltest nach VW-Norm TL182) und eine deutlich verbesserte Abrieb- und Kratzfestigkeit aufweist als die im Stand der Technik beschriebenen Oberflächen. Z.B. zeigt sich auch nach 1000 Hüben im Crockmeter-Test kein optisch ersichtliches Schadensbild. Des Weiteren wurde gefunden, dass durch weitere Modifikation des oben genannten Systems mit Isocyanaten auch eine deutliche Verbesserung der Korrosionsbeständigkeit (CASS-Test) sowohl auf eloxierten, aber insbesondere auf nichteloxierten Al-Bauteilen erreicht werden kann.

Damit wird es durch die Erfindung möglich, das kostenintensive Eloxalverfahren zu vermeiden oder zu ersetzen.

Die durch die Erfindung erreichten Vorteile liegen damit in folgenden Bereichen:
- einfacher Beschichtungsprozess, ohne komplizierte oder mehrfach durchgeführte Sealing-Prozesse;
- signifikant verbesserte chemische und mechanische Beständigkeiten ohne Beeinträchtigung des optischen Erscheinungsbildes, insbesondere bei glanzeloxierten Bauteilen;
- preiswertes Verfahren, welches die Oberflächenanmutung des Aluminiums nicht ändert und
- die Oberflächenstruktur (poliert, geschliffen, mattiert) wird nachgebildet.

Ohne durch diese Theorie gebunden zu sein, können die gefundenen Eigenschaftsverbesserungen dadurch erklärt werden, dass durch die Verwendung des komplexierten Metallalkoholats einerseits eine Ringöffnung des Silans erfolgt, welche die organische Vernetzung mit dem zugesetzten Polyol ermöglicht. Andererseits erfolgt eine Bildung von SiOAl Bindungen, durch die der anorganische Teil des Netzwerkes modifiziert wird. Es entsteht ein hybrides Netzwerk mit verbesserter Alkalibeständigkeit, das aufgrund der hohen Verdichtung sehr guten Korrosionsschutz bietet. Damit kann die bekannte Alkaliinstabilität reiner SiO₂-basierter Systeme verbessert werden. Durch weiteren Zusatz eines Poly- oder Diisocyanats erfolgt eine zusätzliche urethanartige Vernetzung, die zur weiteren Verbesserung der Schutzwirkung beiträgt.

Leichtmetalle im Sinne der Erfindung sind Metalle und Legierungen mit einer Dichte unter 5 g/cm³. Bevorzugt sind Al, Mg und Ti sowie deren Legierungen, besonders bevorzugt ist Al und seine Legierungen, insbesondere mit den Elementen Mn, Mg, Cu, Si, Ni, Zn und Be. Die Bezeichnung von Aluminiumlegierungen folgt der EN 573-3/4.

Die Begriffe "anodisch oxidiert", "anodisiert" und "eloxiert" werden im Rahmen der Erfindung synonym verwendet.

In einer bevorzugten Ausführungsform handelt es sich bei dem Substrat um ein nichteloxiertes Aluminiumsubstrat.

In einer weiteren Ausführungsform handelt es sich bei dem Substrat um ein eloxiertes Aluminiumsubstrat.

### Komponente A

In der Formel (I) des teilhydrolysierten Alkoxysilans haben die Symbole und Indizes bevorzugt folgende Bedeutungen:
- R¹: ist bevorzugt Methyl, Ethyl, Propyl oder Butyl, wobei die letzten beiden Gruppen unverzweigt oder verzweigt, vorzugsweise unverzweigt sind, besonders bevorzugt Methyl oder Ethyl.
- n: ist bevorzugt 2 oder 3, bevorzugt 3.
- R²: ist bevorzugt C₁-C₄-Alkyl, insbesondere Methyl oder Ethyl.
- R³: ist bevorzugt eine Epoxyalkylgruppe, deren Alkylgruppe mit einem oder mehreren Heteroatomen, wie Sauerstoff oder Stickstoff, unterbrochen sein kann. Die Alkylgruppe kann zudem mit einem oder mehreren Substituenten, wie beispielsweise Hydroxy, Amino, Carboxy oder Aryl, substituiert sein. Die Alkylgruppe kann geradkettig, verzweigt und/oder ringförmig vorliegen. Bevorzugte Alkylgruppen enthalten 1 bis 20, insbesondere 1 bis 10 Kohlenstoffatome außerhalb des Oxiranrings. Besonders bevorzugt wird die Alkylgruppe von einem Sauerstoffatom unterbrochen. Eine besonders bevorzugte epoxyfunktionelle Gruppe ist die Glycidyloxypropylgruppe.

Als epoxymodifizierte Alkoxysilane eignen sich beispielsweise 3-Glycidyloxypropyltrimethoxysilan, 3-Glycidyloxypropyltriethoxysilan, 3,4-Epoxybutyltrimethoxysilan, 3,4-Epoxybutyltriethoxysilan, 2-(3,4-Epoxycyclohexyl)ethyltrimethoxysilan, 2-(3,4-Epoxycyclohexyl)ethyltriethoxysilan, 3-Glycidyloxypropyldimethylethoxysilan, 3-Glycidyloxypropyldimethylmethoxysilan, 3-Glycidyloxypropylmethyldiethoxysilan und 3-Glycidyloxypropylmethyldimethoxysilan.

Die epoxyfunktionalisierte Gruppe ist nicht hydrolysierbar.

Geeignete Molverhältnisse sind für die Teilhydrolyse: Silan der allgemeinen Formel (I) zu Wasser im Allgemeinen 7,5 : 1 - 1 : 1,5, bevorzugt 5 : 1 - 1 : 1, besonders bevorzugt ist das Verhältnis 1 : 1.

### Komponente B

Geeignete Metalle sind Metalle mit einer Elektronegativität < 1,5 (nach Pauling) aus den 3. und 4. Haupt- und Nebengruppen des Periodensystems der chemischen Elemente, vorzugsweise Al, Ti, Zr und B. Besonders bevorzugt ist Al.

In der allgemeinen Formel (II) ist n 0 oder 1, bevorzugt 1. X ist bevorzugt eine Gruppe OR⁴. OR⁴ ist bevorzugt C₁₋₆-Alkoxy, C₆₋₁₀-Aryloxy oder H. Bevorzugte Gruppen OR⁴ sind Methoxy, Ethoxy, Propoxy und Butoxy. Besonders bevorzugt sind Ethoxy und sec.-Butoxy.

Besonders bevorzugt sind Aluminiumalkoxide, insbesondere Aluminium-tri-sec.-butoxid (Aluminium-tri-sec.-butylat, Aluminium-tri-sec-butanolat).

Metallalkoxide, beispielsweise Aluminium-sec.-butylat, die durch eine geeignete Komplexbildung eine messbare Verringerung der Hydrolyse- und Kondensationsgeschwindigkeit aufweisen, reagieren mit Alkoxysilanen der allgemeinen Formel (I) nach einer, bezogen auf die vollständige Hydrolyse der (RO)-Gruppen deutlich unterstöchiometrischen Wassermenge, sogenannten durchgeführten Vorhydrolyse zu einer homogenen, transparenten, noch flüssigen Kondensaten, die nach Zugabe eines Polyols (Komponente C) Schichten von außerordentlich hoher hydrolytischer Stabilität bilden.

Geeignete Komplexbildner sind 1,3-Dicarbonylverbindungen, z.B. β-Diketone, und β-Ketoester. Beispiele sind Ethylacetoacetat, Allylacetoacetat, Methacryloxyethylacetoacetat, 3-Acetyl-6-trimethoxysilylhexan-2-on, 2,2,6,6-Tetramethyl-3,5-heptandion, Methylbutyloylacetat, Ethylbenzoylacetat. Bevorzugt als Komplexbildner sind β-Diketone und β-Ketoester, besonders bevorzugt sind Acetylaceton (Pentan-2,4-dion) und Ethylacetoacetat (Acetessigester, Ethyl-3-oxobutyrat), insbesondere Ethylacetoacetat.

Als geeignet haben sich molare Verhältnisse von Metallalkoxid zu Komplexbildner von 0,9:1,1 und als besonders geeignet 1:1 erwiesen.

### Komponente C

Geeignet als Komponente C sind oligomere oder polymere Polyole, wie Polyvinylalkohole (erhältlich beispielsweise unter den Mowiol® Marken oder Polyester mit OH-Gruppen.

Als Komponente C können vorzugsweise Polyesterpolyole, Polyetherpolyole, Polyetheresterpolyole, Polycarbonatpolyoie, Polyethercarbonatpolyole, Polybutadienderivate, Polysiloxane basierte Derivate sowie deren Mischungen eingesetzt werden, wie sie aus der Herstellung von Polyurethanen bekannt sind.

Geeignete Polyesterpolyole können Polykondensate aus Di- sowie gegebenenfalls Tri- und Tetraolen und Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Polyesterpolyole werden in an sich bekannter Weise durch Polykondensation aus aliphatischen und/oder aromatischen Polycarbonsäuren mit 4 bis 16 Kohlenstoffatomen, gegebenenfalls aus deren Anhydriden sowie gegebenenfalls aus deren niedermolekularen Estern, inklusive Ringestern hergestellt, wobei als Umsetzungskomponente überwiegend niedermolekulare Polyole mit 2 bis 12 Kohlenstoffatomen zum Einsatz kommen. Beispiele für geeignete Alkohole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimetylolbenzol oder Trishydroxyethylisocyanurat oder Mischungen davon eingesetzt werden. Besonders bevorzugt werden Diole eingesetzt, ganz besonders bevorzugt Butandiol(1,4) und Hexandiol(1,6), ganz besonders bevorzugt Hexandiol(1,6).

Als Dicarbonsäuren können dabei beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dirnethylbernsteinsäure eingesetzt werden. Als Säurequelle können auch die entsprechenden Anhydride verwendet werden.

Es können zusätzlich auch Monocarbonsäuren, wie Benzoesäure und Hexancarbonsäure mit verwendet werden.

Geeignete Verbindungen werden beispielsweise von Covestro unter den Desmophen® Marken vertrieben. Bevorzugt ist insbesondere Desmophen D651 MDA/X, ein verzweigtes Polyesterpolyol von Covestro.

### Komponente D

Als Komponente D eignen sich erfindungsgemäß geblockte Polyisocyanate auf Basis von beispielsweise 1,4-Butylendiisocyanat, 1,6 Hexamethylendiisocyanat (HDI), Isophorondiisocyanat (IPDI), 2,2,4 und/oder 2,4,4- Trimethylhexamethylendiisocyanat, die isomeren Bis-(4,4'-isocyanatcyclohexyl)methane (H12-MDI) oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2.4- und/oder 2,6-Toluylendiisocyanat (TDI), 1,5-Naphthylendiisocyanat, 2.2'- und/oder 2,4'- und/oder 4,4'- Diphenylmethandiisocyanat (MDI), 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Modifizierungen wie etwa Allophanat-, Uretdion-, Urethan-, Isocyanurat-, Biuret-, Iminooxadiazindion- oder Oxadiazintrionstruktur enthaltende Verbindungen basierend auf den genannten Diisocyanaten geeignete Bausteine der Komponente D sowie mehrkernige Verbindungen wie beispielsweise polymeres MDI (pMDI) sowie Kombinationen von allen.

Besonders bevorzugt werden geblockte Diisocyanate auf Basis von HDI und IPDI verwendet.

Die Isocyanatgruppen liegen partiell oder ganz blockiert vor, so dass sie nicht unmittelbar mit einer Isocyanat reaktiven Gruppe reagieren können. Dies gewährleistet, dass die Reaktion erst bei einer bestimmten Temperatur (Blockierungstemperatur) stattfindet. Typische Blockierungsmittel finden sich im Stand der Technik und sind so ausgewählt, dass sie bei Temperaturen zwischen 60 und 220°C, je nach Substanz, von der Isocyanatgruppe wieder abspalten und erst dann mit der Isocyanat reaktiven Gruppe reagieren. Typische Blockierungsmittel sind beispielsweise Caprolactam, Methylethylketoxim, Pyrazole wie beispielsweise 3,5-Dimethyil-2-pyrazol oder 1-Pyrazol, Triazole wie beispielsweise 1,2,4-Triazol, Diisopropylamin, Diethylmalonat, Diethylamin, Phenol oder dessen Derivate oder Imidazol.

Entsprechende geblockte Isocyanate sind kommerziell erhältlich, beispielsweise unter den Desmodur®-Marken von Covestro. Besonders bevorzugt sind geblockte Polyisocyanate auf Basis Isophorondiisocyanat und Hexamethylendiisocyanat, wie sie unter der Bezeichnung Desmodur® PL 340 und 350 von Covestro erhältlich sind.

Die Herstellung der Beschichtungszusammensetzung erfolgt vorteilhaft in mehreren Stufen. Zunächst wird das Teilhydrolysat (Ausgangskomponente A) hergestellt, bei dem das Alkoxysilan (I) mit Wasser im molaren Verhältnis 7,5:1 - 1:1,5, bevorzugt im Verhältnis 5:1 - 1:1 und besonders bevorzugt im Verhältnis 1:1 zugesetzt und bei Raumtemperatur intensiv gerührt wird. Als geeignet haben sich Zeiträume zwischen 8 und 16 Stunden, besonders bevorzugt 12 Stunden, herausgestellt.

Die Herstellung des Metallalkoxid-Komplexes (Ausgangskomponente B) erfolgt bei niedrigen Temperaturen zwischen -10°C und 0°C, besonders bevorzugt sind Temperaturen bei 0°C im Eisbad. Zu dem vorgelegten Metallalkoxid erfolgt unter Luftausschluss die Zugabe des Komplexbildners. Anschließend erfolgt Rühren, vorzugsweise zwischen 8 und 48 Stunden, wobei 24 Stunden besonders bevorzugt sind.

Die Herstellung der Basislösung durch Reaktion der Ausgangskomponenten A und B erfolgt im Allgemeinen durch Mischen von Ausgangskomponente A mit Ausgangskomponente B bei Temperaturen zwischen vorzugsweise -10°C und 0°C, wobei das Eisbad mit 0°C besonders bevorzugt ist.

Die Mischung erfolgt durch Zugabe der Metallkomplexlösung unter Rühren zum Vorhydrolysat des Alkoxysilans (I) im molaren Verhältnis 0,1:1 - 1:1, bevorzugt 0,2:1 - 0,5:1, insbesondere 0,3:1 - 0,4:1.

Die Zeitdauer des Rührens erfolgt bei Temperaturen zwischen 0°C und 50°C, bevorzugt sind 10 bis 30°C, besonders bevorzugt 25°C. Die Rührdauer und damit die Dauer des homogenen Vermischens beträgt zwischen 1 und 60 Minuten vorzugsweise zwischen fünf und 45 Minuten, besonders bevorzugt 30 Minuten.

Zu der entstandenen Mischung aus den Komponenten A und B wird als Komponente C ein oligomeres oder polymeres Polyol, zum Beispiel ein Polyvinylalkohol oder Polyesteralkohol, zugesetzt.

Das Molverhältnis von Alkoxysilan (I) zu Polyol beträgt im Allgemeinen 2:1 - 1:2.

Um die Reaktion zu vervollständigen, werden pro 50 ml Reaktionslösung zwischen 3 bis 100 ml, bevorzugt 3 bis 50 und besonders bevorzugt 4 bis 4,5 ml destilliertes Wasser zugetropft und für weitere ein bis fünf, bevorzugt 2 Stunden gerührt (Basislösung).

Optional können zu der beschriebenen Mischung als Komponente D Polyisocyanate zugegeben werden.

In einer bevorzugten Ausführungsform enthält die Beschichtungszusammensetzung geblockte Isocyanate als Komponente D. Diese wird typischerweise unter Rühren zu der Lösung der Komponenten A, B und C gegeben.

Dabei beträgt das Verhältnis von freien Hydroxygruppen im Polyol zu NCO-Gruppen im Allgemeinen 5:1 bis 1:1, bevorzugt 2,5:1 bis 1:1, insbesondere 1,2:1 bis 1:1.

Zur Vervollständigung der Reaktion wird nachgerührt, typischerweise zwischen 1 und 3 h.

In einer weiteren Ausführungsform enthält die Beschichtungszusammensetzung keine geblockte Isocyanate als Komponente D.

Zur Herstellung von Beschichtungslösungen werden der Basislösung zum Einstellen der geeigneten Viskosität handelsübliche Lösemittel zugesetzt, wie sie zum Beispiel in technischen Handbüchern für Lacke beschrieben sind. Beispiele hierfür sind aliphatische Alkohole, aliphatische Ester, alkoxygruppenhaltige Alkohole wie zum Beispiel 1-Methoxy-2-Propanol, Ketone, auch substituierte, wie zum Beispiel Butylacetat oder Xylol oder auch Mischungen aus diesen.

Die zugesetzten Mengen pro 50 ml Beschichtungszusammensetzung liegen zwischen 5 und 200 ml, bevorzugt zwischen 10 und 100 ml und besonders bevorzugt zwischen 10 und 20 ml.

Darüber hinaus können der Basislösung handelsübliche Additive zur Anpassung der Rheologie, insbesondere Benetzungshilfsmittel und Verlaufshilfsmittel, wie sie beispielsweise von der Firma Byk in verschiedensten Ausführungen vertrieben werden, zugesetzt werden.

In einer Ausführungsform werden zur Erzielung verschiedener Farbeffekte der Basislösung neben den oben genannten Additiven entweder als Farbmittel Pigmente (organische und anorganische, farbige anorganische Ionen oder farbige Komplexe, Effektpigmente) oder lösliche Farbstoffe zugegeben. Stellvertretend für die Vielzahl der sich am Markt befindenden Pigmente seien beispielsweise aus der Palette der BASF SE, Effektpigmente Black Olive™>, Effektpigmente auf Glimmerbasis, Dynacolor® Perlglanzpigmente, Firemist® Pigmente auf Borosilikatbasis, Glacier™ Frost White, Graphitan® Graphit-Schwarzpigment, Lumina® Effektpigmente auf Glimmerbasis, Lumina® Royal Effektpigmente auf Glimmerbasis, MagnaPearl® Perlglanzpigmente, Mearlin® Perlglanzpigmente, Mearlite® Glanzpigmente, Metasheen® Vakuum-metallisierte Aluminumpigmente, Paliocrom® Effektpigmente, Paliocrom® Brilliant Effektpigmente, Santa Fe™ Farbeffektpigmente oder andere, wie zum Beispiel Timrex KS4, Aerosil 200 und Iriodin 299 bzw. aus Timrex KS4, Aerosil 200 und Iriodin 532 genannt. Bei Metallkomplexfarbstoffen handelt es sich zum Beispiel um anionische Chrom und Kobaltkomplexe von Azofarbstoffen. Das Kation ist zum Beispiel entweder ein Natriumion oder ein substituiertes Ammoniumion. Substituierte lösliche Phthalocyanine gehören ebenfalls in diese Kategorie.

Beispiele für organische Azo-Pigmente sind: Monoazogelb und -orange, Naphthol, Naphthol AS, Azofarblacke, Benzimidazolon, Metallorganische Komplexe.

Beispiele für organische polyzyklische Pigmente sind: Phthalocyanin, Chinacridon, Perylen und Perinon, Thioindigo, Anthrachinon, Dioxazin, Isoindolinon und Isoindolin, Diketo-pyrrolopyrrol (DPP), Triarylcarbonium, Chinophthalon Beispiele für anorganische Pigmente sind:
Eisenoxid, Chromoxidgrün, Ultramarinblau, Eisenblau, Phthalochromgrün, verschiedene Mischmetalloxide Bi-Vanadat, Manganoxid (MnO). Als Farbstoffe kommen beispielsweise Anthrachinonfarbstoffe, Azofarbstoffe, Dioxazinfarbstoffe, Indigofarbstoffe, Nitro- und Nitrosofarbstoffe, Phthalocyaninfarbstoffe, Schwefelfarbstoffe, Triphenylmethanfarbstoff in Frage. Spezielle Beispiele sind Kongorot, Methylorange, Rhodamin B oder Methylrot. Die für 50 ml Beschichtungslösung benötigten Pigmente hängen von der gewünschten Intensität der Farbe ab und reichen von 0,1 bis 20 g, bevorzugt zwischen 1 und 15 g besonders bevorzugt zwischen zwei und 12 g.

Zur intensiven Dispersion werden die Mischungen aus Basislösung und Pigment beispielsweise in einer Kugelstrahlmühle bei im Allgemeinen 1000 bis 2500 Umdrehungen/min, bevorzugt bei 2000 Umdrehungen/min dispergiert. Die Dispergierzeit liegt im Allgemeinen bei 5 bis 120 Minuten, bevorzugt bei 10 bis 80 Minuten und besonders bevorzugt bei 50 bis 70 Minuten.

Das nasschemische Aufbringen (Schritt a)) der Beschichtungszusammensetzung kann über die üblichen, dem Fachmann bekannten nasschemischen Beschichtungstechniken aufgetragen werden, z.B. Sprühen, Tauchen, Gießen, Schleudern, Walzenauftrag, Aufstreichen, Rakeln oder Curtain-Coating. Es können z.B. auch Druckverfahren, wie beispielsweise Siebdruck, verwendet werden. Bevorzugt ist eine Auftragung durch Sprühen, beispielsweise auf glanzeloxierte Zierleisten.

Die auf das Substrat aufgetragene Beschichtungszusammensetzung wird normalerweise bei Temperaturen von 130 bis ca. 200°C, bevorzugt 170 bis 190.°C gehärtet (Schritt b)), wobei im Falle einer Eloxaloberfläche Temperaturen bis ca. 160°C und Härtungszeiten von ca. 1 h angewendet werden. Die thermische Verdichtung kann gegebenenfalls auch durch IR- oder NIR-Strahlung erfolgen.

Die Härtung kann durch eine beliebige Art der Wärmezuführung erfolgen (Umgebungstemperatur, Infrarotstrahlung, Mikrowellenstrahlung). Bei konventioneller Wärmezufuhr beträgt die Auswertungszeit zwischen 20 und 120 Minuten, besonders bevorzugt zwischen 50 und 70 Minuten. Die Härtungstemperaturen liegen bei 120 bis 220°C bevorzugt bei 140 bis 200°C und besonders bevorzugt bei 150 bis 190°C.

Die Mikrowellenhärtung erfolgt mit marktgängigen Anlagen und die Härtungszeit beträgt zwischen 5 und 20 Minuten, besonders bevorzugt zwischen 5 und 15 Minuten.

Das mit der Hybridschicht versehene Substrat kann ein Halbzeug, wie Platten, Bleche, Rohre, Stangen oder Drähte, ein Bauteil bzw. Komponente oder ein Fertigprodukt sein. Es kann z.B. für Anlagen, Werkzeuge, Hausgeräte, Elektrobauteile, Maschinen, Fahrzeugteile, insbesondere Automobilbauteile, Produktionsanlagen, Fassaden, Wärmetauscher, Bügeleisen oder Teile davon verwendet werden.

Die Beschichtungen sind insbesondere geeignet für Aluminiumsubstrate wie Metallgehäuse von elektronischen Geräten, Bauteile für optische Geräte, Teile von Fahrzeugen im Innen- und Außenbereich, Bauteile im Maschinen- und Anlagenbau, Motoren, Bauteile von medizintechnischen Geräten, Bauteile von Hausgeräten, andere Elektrogeräte und Turbinen, Haushaltsgeräte, Fassadenbauteile, Komponenten von Aufzügen, Teile von Fördereinrichtungen, Teile von Möbeln, Gartengeräte, Landmaschinen, Beschläge, Motorenbauteile und Produktionsanlagen allgemein.

Die Erfindung wird durch die nachstehenden Beispiele weiter erläutert, die in keiner Weise beschränken sollen.

### Beispiel 1

0,246 mol 3-Glycidyloxypropyltrimethoxysilan (GLYMO) wurden vorgelegt und dazu tropfenweise 0,246 mol destilliertes Wasser zugefügt. Die Mischung wurde 24h gerührt (Lösung A).

0,095 mol Ethylacetoacetat wurden in einem Rundkolben vorgelegt und im Eisbad gekühlt. 0,095 mol Aluminium-sec.-butoxid wurden mittels eines Tropftrichters so zugetropft, dass die Temperatur der Mischung unter 40 °C blieb. Die Mischung wurde 24h gerührt (Lösung B).

Lösung A und Lösung B wurden in der Art vereint, dass Lösung A im Eisbad gekühlt und Lösung B zugetropft wurde. Anschließend ließ man 1 h nachrühren. Zu der entstandenen Mischung gab man 59,7 g verzweigten Polyester mit freien OH-Gruppen (Desmophen® D651 MPA/X) und rührte so lange, bis die Lösung transparent wurde. Zum Abschluss wurden 0,692 mol Wasser und 1,900 mol Ethanol zu der Mischung hinzugegeben und 2 h nachgerührt.

### Beispiel 2

0,246 mol 3-Glycidyloxpropyltrimethoxysilan (GLYMO) wurden vorgelegt und dazu tropfenweise 0,246 mol destilliertes Wasser zugefügt. Die Mischung wurde 24h gerührt (Lösung A).

0,095 mol Ethylacetoacetat wurden in einem Rundkolben vorgelegt und im Eisbad gekühlt. 0,095 mol Aluminium-sec.-butylat wurden mittels eines Tropftrichters so zugetropft, dass die Mischung unter 40 °C blieb. Die Mischung wurde 24h gerührt (Lösung B).

Lösung A und Lösung B wurden in der Art vereint, dass Lösung A im Eisbad gekühlt und Lösung B zugetropft wurde. Anschließend ließ man 1 h nachrühren. Zu der entstandenen Mischung gab man 59,7 g eines verzweigten, Hydroxylgruppen enthaltenden Polyesters (Desmophen® D651 MPA/X) und rührte so lange, bis die Lösung transparent wurde. Daraufhin wurde eine Mischung aus geblockten aliphatischen Polyisocyanaten auf Basis von Isophorondiisocyanat (IPDI) und Hexamethylendiisocyanat (9,00 g Desmodur® PL340 und 20,88 g Desmodur® PL350) zu der Mischung hinzugegeben und nachgerührt. Zum Abschluss wurden 0,278 mol Wasser und 1,900 mol Ethanol zu der Mischung hinzugegeben und 2 h nachgerührt.

### Sprühbeschichtung

Für die Sprühbeschichtung wurde die vorbeschriebene Beschichtungslösung mit 8 g 1-Methoxy-2-propanol gemischt und mit einer 0,5 mm Düse auf Q-Panels aus der Aluminiumlegierung AW EN 5005 oder auf glanzeloxierten Strangpressprofilen der Legierung AW EN 6060 appliziert.

### Aushärten der Schicht mit Wärme

Die Schicht wurde thermisch bei einer Temperatur von 160 °C für eine Stunde ausgehärtet.

Die Eigenschaften der erfindungsgemäß hergestellten Schichten wurden mit folgenden Methoden getestet:

### Alkalistabilität

Die Alkalistabilität der Oberfläche wurde bei 23°C durch ein Verfahren mit folgender Abfolge (Säure-Wärme-Alkalibeständigkeit-Test)geprüft:
- 10 min Tauchen in Lösung pH 1 (0,1 n Salzsäure)
- Abwaschen in vollentsalztem Wasser und Trocknen
- 1 h bei 40 °C Wärmelagerung (ohne Abkühlung weitere Prüfabfolge)
- 10 min Tauchen in Lösung pH 14 (1,0 n Natronlauge)
- Abwaschen in vollentsalztem Wasser und Trocken

Nach der Durchführung gab es keine optischen Veränderungen gegenüber dem Ausgangszustand.

### Kratzfestigkeit:

Die Kratzfestigkeit der Oberflächen der Beschichtungen wurde mit Hilfe eines Crockmeter-Tests (in Anlehnung an EN ISO 105-X12 mit 1000 Doppelhüben und 9 N Auflagekraft unter Verwendung eines Schwammes (Scotch-Brite™ SCH106) getestet.,

Nach der Durchführung gab es keine optischen Veränderungen gegenüber dem Ausgangszustand.

### Korrosionsbeständigkeit

Zur Prüfung der Korrosionsbeständigkeit der Oberflächenbeschichtung wurde diese einem Salzsprühnebeltest nach DIN EN ISO 9227 unterzogen. Insbesondere kam der CASS-Test nach DIN EN ISO 9227 CASS zum Einsatz.

Nach 48 h CASS-Test gab es keine Änderungen zum Ausgangszustand.

## Patentansprüche

1. Verfahren zur Herstellung eines beschichteten Leichtmetall-, insbesondere Aluminiumsubstrats, enthaltend die Schritte
a) nasschemisches Aufbringen einer Beschichtungszusammensetzung auf das Leichtmetallsubstrat und
b) thermisches Aushärten der Beschichtungszusammensetzung,
wobei die Beschichtungszusammensetzung ein Sol-Gel-Material enthält, erhalten aus
A. einem oder mehreren teilhydrolysierten Alkoxysilanen der Formel (I),
(R¹O)ₙSiR²₃₋ₙR³ (I),
wobei die Symbole und Indizes folgende Bedeutungen haben:
R¹ ist C₁-C₆-Alkyl oder C₁-C₁₀-Aryl
R² ist C₁-C₄-Alky), C₂-C₄-Alkenyl oder C₂-C₄-Alkinyl, C₆-C₁₀-Aryl, C₆-C₁₀-Aralkyl oder C₆-C₁₀-Alkaryl,
R³ ist eine epoxyfunktionalle Gruppe und
n ist 1, 2 oder 3;
B. einem oder mehreren Metallalkoxiden der Formel (II)
M^{+(4-m)}(X)₄₋ₘ (II),
wobei die Symbole und Indizes folgende Bedeutungen haben:
M ist ein Metall der 3. oder 4. Haupt- oder Nebengruppe mit EN < 1,5, bevorzugt Al, Zr, Ti oder B, besonders bevorzugt Al;
X ist (OR⁴), Halogen, NH₃ oder ein primäres, sekundäres oder tertiäres (C₁-C₄)-Alkylamin;
R⁴ ist C₁-C₆-Alkyl oder C₆-C₁₀-Aryl und
m ist 0 oder 1, bevorzugt 1
in Kombination mit einem oder mehreren Komplexbildnern aus der Gruppe der 1,3-Dicarbonylverbindungen;
C. einem oder mehreren oligomeren oder polymeren Polyolen und
D. gegebenenfalls einem oder mehreren geblockten Polyisocyanaten.

2. Verfahren gemäß Anspruch 1, wobei die Symbole und Indizes in der Formel (I) folgende Bedeutungen haben:
R¹ ist C₁-C₄-Alkyl;
R³ ist 3-Glycidyloxypropyl und
n ist 3.

3. Verfahren gemäß Anspruch 1 oder 2, wobei die Verbindung (I) gewählt ist aus 3-Glycidyloxypropyltrimethoxysilan und 3-Glycidyloxypropyltriethoxysilan.

4. Verfahren gemäß einem der Ansprüche 1 bis 3, wobei die Teilhydrolyse der Verbindung der Formel (I) durch Zugabe von 0,13 bis 1,5 mol Wasser, bezogen auf 1 mol der Verbindung (I), hergestellt wird.

5. Verfahren gemäß einem der Ansprüche 1 bis 4, wobei die Symbole und Indizes in der Formel (II) folgende Bedeutungen haben:
M ist Al, Zr, Ti oder B;
X ist OR⁴;
R⁴ ist C₁-C₆-Alkyl und
m ist 0 oder 1.

6. Verfahren gemäß einem der Ansprüche 1 bis 5, wobei die Verbindung (II) Aluminium-tris-sec.-butoxid ist.

7. Verfahren gemäß einem der Ansprüche 1 bis 6, wobei der Komplexbildner der Komponente B gewählt ist aus Acetylaceton und Ethylacetoacetat.

8. Verfahren gemäß einem der Ansprüche 1 bis 7, wobei als Komponente C ein verzweigter Polyesterpolyol eingesetzt wird.

9. Verfahren gemäß einem der Ansprüche 1 bis 8, wobei die Komponente D vorhanden ist und als Komponente D ein oder mehrere geblockte Polyisocyanate auf Basis von Isophorondiisocyanat oder Hexamethylendiisocyanat eingesetzt werden.

10. Verfahren gemäß einem der Ansprüche 1 bis 9, wobei das nasschemische Aufbringen in Schritt a) durch Aufsprühen erfolgt.

11. Verfahren gemäß einem der Ansprüche 1 bis 10, wobei das thermische Aushärten in Schritt b) bei einer Temperatur im Bereich von 130 bis 200 °C erfolgt.

12. Verfahren gemäß einem der Ansprüche 1 bis 11, wobei das Leichtmetallsubstrat, insbesondere Aluminiumsubstrat, ein Trittbrett oder eine Zierleiste ist.

13. Leichtmetallsubstrat, insbesondere Aluminiumsubstrat, beschichtet mit einem Verfahren gemäß einem der Ansprüche 1 bis 11.

14. Leichtmetallsubstrat, beschichtet mit einer Beschichtungszusammensetzung, wie in einem der Ansprüche 1 bis 9 beschrieben.

15. Verwendung einer Beschichtungszusammensetzung wie in einem der Ansprüche 1 bis 9 beschrieben zur Beschichtung von Leichtmetailsubstraten, insbesondere Aluminiumsubstraten.

## Claims

1. Process for producing a coated lightweight metal, in particular aluminium, substrate, which comprises the steps
a) wet-chemical application of a coating composition to the lightweight metal substrate and
b) thermal curing of the coating composition,
wherein the coating composition contains a sol-gel material obtained from
A. one or more partially hydrolysed alkoxysilanes of the formula (I),
(R¹O)ₙSiR²₃₋ₙR³ (I),
where the symbols and indices have the following meanings:
R¹ is C₁-C₆-alkyl or C₁-C₁₀-aryl,
R² is C₁-C₄-alkyl, C₂-C₄-alkenyl or C₂-C₄-alkynyl, C₆-C₁₀-aryl, C₆-C₁₀-aralkyl or C₆-C₁₀-alkaryl,
R³ is an epoxy-functional group and
n is 1, 2 or 3;
B. one or more metal alkoxides of the formula (II)
M^{+(4-m)}(X)₄₋ₘ (II),
where the symbols and indices have the following meanings:
M is a metal of main or transition group 3 or 4 having an EN < 1.5, preferably Al, Zr, Ti or B, particularly preferably Al;
X is (OR⁴), halogen, NH₃ or a primary, secondary or tertiary (C₁-C₄)-alkylamine,
R⁴ is C₁-C₆-alkyl or C₆-C₁₀-aryl and
m is 0 or 1, preferably 1,
in combination with one or more complexing agents from the group consisting of 1,3-dicarbonyl compounds;
C. one or more oligomeric or polymeric polyols and
D. optionally one or more blocked polyisocyanates.

2. Process according to Claim 1, wherein the symbols and indices in the formula (I) have the following meanings:
R¹ is C₁-C₄-alkyl;
R³ is 3-glycidyloxypropyl and
n is 3.

3. Process according to Claim 1 or 2, wherein the compound (I) is selected from among 3-glycidyloxypropyltrimethoxysilane and 3-glycidyloxypropyltriethoxysilane.

4. Process according to any of Claims 1 to 3, wherein the partial hydrolysis of the compound of the formula (I) is brought about by addition of from 0.13 to 1.5 mol of water, based on 1 mol of the compound (I) .

5. Process according to any of Claims 1 to 4, wherein the symbols and indices in the formula (II) have the following meanings:
M is Al, Zr, Ti or B;
X is OR⁴;
R⁴ is C₁-C₆-alkyl and
m is 0 or 1.

6. Process according to any of Claims 1 to 5, wherein the compound (II) is aluminium tris-sec-butoxide.

7. Process according to any of Claims 1 to 6, wherein the complexing agent of the component B is selected from among acetylacetone and ethyl acetoacetate.

8. Process according to any of Claims 1 to 7, wherein a branched polyester polyol is used as component C.

9. Process according to any of Claims 1 to 8, wherein the component D is present and one or more blocked polyisocyanates based on isophorone diisocyanate or hexamethylene diisocyanate are used as component D.

10. Process according to any of Claims 1 to 9, wherein the wet-chemical application in step a) is effected by spraying.

11. Process according to any of Claims 1 to 10, wherein the thermal curing in step b) is effected at a temperature in the range from 130 to 200°C.

12. Process according to any of Claims 1 to 11, wherein the lightweight metal substrate, in particular aluminium substrate, is a running board or a decorative strip.

13. Lightweight metal substrate, in particular aluminium substrate, coated by means of a process according to any of Claims 1 to 11.

14. Lightweight metal substrate coated with a coating composition as described in any of Claims 1 to 9.

15. Use of a coating composition as described in any of Claims 1 to 9 for coating lightweight metal substrates, in particular aluminium substrates.

## Revendications

1. Procédé de fabrication d'un substrat en métal léger, notamment en aluminium, revêtu, comprenant les étapes suivantes :
a) l'application par voie chimique à l'état humide d'une composition de revêtement sur le substrat en métal léger, et
b) le durcissement thermique de la composition de revêtement,
la composition de revêtement contenant un matériau sol-gel, obtenu à partir de :
A. un ou plusieurs alcoxysilanes partiellement hydrolysés de formule (I) :
(R¹O)ₙSiR²₃₋ₙR³ (I)
dans laquelle les symboles et les indices ont les significations suivantes :
R¹ représente alkyle en C₁-C₆ ou aryle en C₁-C₁₀,
R² représente alkyle en C₁-C₄, alcényle en C₂-C₄ ou alcynyle en C₂-C₄, aryle en C₆-C₁₀, aralkyle en C₆-C₁₀ ou alkaryle en C₆-C₁₀,
R³ représente un groupe à fonction époxy, et
n représente 1, 2 ou 3,
B. un ou plusieurs alcoxydes métalliques de formule (II) :
M^{+(4-m)}(X)₄₋ₘ (II)
dans laquelle les symboles et les indices ont les significations suivantes :
M représente un métal du groupe principal ou de transition 3 ou 4 avec EN < 1,5, de préférence Al, Zr, Ti ou B, de manière particulièrement préférée Al ;
X représente (OR⁴), halogène, NH₃ ou une alkylamine en (C₁-C₄) primaire, secondaire ou tertiaire ;
R⁴ représente alkyle en C₁-C₆ ou aryle en C₆-C₁₀, et
m représente 0 ou 1, de préférence 1,
en combinaison avec un ou plusieurs complexants du groupe des composés de 1,3-dicarbonyle ;
C. un ou plusieurs polyols oligomères ou polymères, et
D. éventuellement un ou plusieurs polyisocyanates bloqués.

2. Procédé selon la revendication 1, dans lequel les symboles et les indices dans la formule (I) ont les significations suivantes :
R¹ représente alkyle en C₁-C₄ ;
R³ représente 3-glycidyloxypropyle et
n représente 3.

3. Procédé selon la revendication 1 ou 2, dans lequel le composé (I) est choisi parmi le 3-glycidyloxypropyltriméthoxysilane et le 3-glycidyloxypropyltriéthoxysilane.

4. Procédé selon l'une quelconque des revendications 1 à 3, dans lequel l'hydrolyse partielle du composé de formule (I) a lieu par ajout de 0,13 à 1,5 mole d'eau, pour 1 mole du composé (I).

5. Procédé selon l'une quelconque des revendications 1 à 4, dans lequel les symboles et les indices dans la formule (II) ont les significations suivantes :
M représente Al, Zr, Ti ou B ;
X représente OR⁴ ;
R⁴ représente alkyle en C₁-C₆, et
m représente 0 ou 1.

6. Procédé selon l'une quelconque des revendications 1 à 5, dans lequel le composé (II) est le tris-sec.-butoxyde d'aluminium.

7. Procédé selon l'une quelconque des revendications 1 à 6, dans lequel le complexant du composant B est choisi parmi l'acétylacétone et l'acétoacétate d'éthyle.

8. Procédé selon l'une quelconque des revendications 1 à 7, dans lequel un polyester-polyol ramifié est utilisé en tant que composant C.

9. Procédé selon l'une quelconque des revendications 1 à 8, dans lequel le composant D est présent, et un ou plusieurs polyisocyanates bloqués à base de diisocyanate d'isophorone ou de diisocyanate d'hexaméthylène sont utilisés en tant que composant D.

10. Procédé selon l'une quelconque des revendications 1 à 9, dans lequel l'application par voie chimique à l'état humide à l'étape a) a lieu par pulvérisation.

11. Procédé selon l'une quelconque des revendications 1 à 10, dans lequel le durcissement thermique à l'étape b) a lieu à une température dans la plage allant de 130 à 200 °C.

12. Procédé selon l'une quelconque des revendications 1 à 11, dans lequel le substrat en métal léger, notamment le substrat en aluminium, est un marchepied ou une moulure.

13. Substrat en métal léger, notamment substrat en aluminium, revêtu par un procédé selon l'une quelconque des revendications 1 à 11.

14. Substrat en métal léger, revêtu avec une composition de revêtement telle que décrite dans l'une quelconque des revendications 1 à 9.

15. Utilisation d'une composition de revêtement telle que décrite dans l'une quelconque des revendications 1 à 9 pour le revêtement de substrats en métal léger, notamment de substrats en aluminium.
